# EUROPÄISCHE PATENTSCHRIFT

(11) **EP 2 191 995 B1**
(45) Veröffentlichungstag und Bekanntmachung des Hinweises auf die Patenterteilung: **08.08.2012**
(21) Anmeldenummer: 09177024.8
(22) Anmeldetag: 25.11.2009
(51) Int. Cl.: B60K 17/28, F16D 67/04

(54) **Getriebe**
Gearbox
Engrenage

(30) Priorität: 01.12.2008 DE 102008044220
(43) Veröffentlichungstag der Anmeldung: 02.06.2010
(73) Patentinhaber: DEERE & COMPANY, Moline, Illinois 61265-8098 (US)
(72) Erfinder: Vergara, Daniel, 28820 Madrid (ES)
(74) Vertreter: Reichert, Christian

(56) Entgegenhaltungen:
- EP-A1- 0 850 797
- EP-A1- 1 510 394
- US-A- 3 872 954

## Beschreibung

Die Erfindung betrifft ein Getriebe, insbesondere Zapfwellengetriebe, mit einem Getriebegehäuse, einer im Getriebegehäuse gelagerten Welle und einer im Getriebegehäuse angeordneten Bremse zum Bremsen der Welle, wobei die Bremse einen ersten auf der Welle axial verschiebbar gelagerten Ringkolben und einen am Getriebegehäuse befestigten Bremskörper umfasst, wobei der erste Ringkolben axial in Richtung des Bremskörpers gegen diesen vorspannbar und durch axiale Verschiebung entgegen der Vorspannung von diesem lösbar ist.

Im Stand der Technik sind Getriebeanordnungen für Zapfwellengetriebe bekannt. Zapfwellengetriebe werden an landwirtschaftlichen Fahrzeugen, insbesondere Schlepper, eingesetzt und dienen dem Antrieb von Anbaugeräten oder Anhängegeräten, die an eine am Fahrzeug vorgesehene Anhängevorrichtung, insbesondere Dreipunktanhängevorrichtung, an das Fahrzeug angehängt bzw. angebaut werden können. Derartige Anhängevorrichtungen können je nach Anwendung und Ausbildung des Fahrzeugs sowohl heckseitig als auch frontseitig vorgesehen sein, somit werden auch Zapfwellengetriebe sowohl heckseitig als auch frontseitig am Fahrzeug vorgesehen. Der Antrieb für das Anbaugerät bzw. Anhängegerät erfolgt über eine Abtriebswelle des Zapfwellengetriebes, die über eine oder mehrere im Zapfwellengetriebe angeordnete Getriebestufen antreibbar ist und in Form einer Zapfwelle aus dem Getriebegehäuse des Zapfwellengetriebes herausragt, um mit dem entsprechenden Anbaugerät bzw. Anhängegerät verbunden zu werden. Die oben genannten Getriebeanordnungen weisen in der Regel eine Bremseinrichtung auf, die dazu dient, die Abtriebswelle der Getriebeanordnung sowie den Antriebsstrang des entsprechenden Anbaugerätes bzw. Anhängegerätes abzubremsen bzw. festzustellen.

Es ist eine Bremseinrichtungen bekannt, die einen auf der Abtriebswelle axial verschiebbaren Ringkolben aufweist, der durch axiale Vorspannung, beispielsweise über Tellerfedern, mit einem am Getriebegehäuse befestigten Bremskörper in Eingriff bringbar ist, um die Abtriebswelle der Getriebeanordnung bzw. den Antriebsstrang des entsprechenden Anbaugerätes bzw. Anhängegerätes abzubremsen bzw. festzustellen. Ferner ist an dem Ringkolben ein Druckraum ausgebildet, der es ermöglicht, den Ringkolben axial entgegen der Vorspannung von dem Bremskörper zu lösen. Gleichzeitig wird dabei der Ringkolben mit einer Kupplung in Eingriff gebracht, die die Abtriebswelle mit dem Antriebsstrang des Getriebes verbindet.

In der gattungsgemäßen EP 0 850 797 A1 wird ein Zapfwellengetriebe beschrieben, mit einer Zapfwellenbremse, welche einen Ringkolben aufweist der hydraulisch gegen einen ringförmigen Bremskörper gedrückt wird. Der Bremskörper ist dabei fest an dem Gehäuse des Zapfwellengetriebes gelagert.

Die obige Bremseinrichtungen ist mit einem relativ hohen Verschleiß des Bremskörpers verbunden, was zu kurzen Wartungsintervallen bzw. zu einer relativ geringen Lebensdauer der Bremse führt.

Die der Erfindung zugrunde liegende Aufgabe wird darin gesehen, ein Getriebe der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Getriebe der eingangs genannten Art derart ausgebildet, dass der Bremskörper axial verschiebbar gelagert und ringförmig ausgebildet ist wobei der Bremskörper an einen zweiten, am Getriebegehäuse gelagerten und axial verschiebbaren Ringkolben gelagert ist. Durch eine axiale Verschiebbarkeit des Bremskörpers wird ermöglicht, dass dieser bei eintretendem Verschleiß nachgestellt werden kann. Dadurch verlängern sich Wartungsintervalle nach denen der Bremskörper erneuert werden muss. Die Lebensdauer des Getriebes wird somit verlängert. Vorzugsweise ist es vorgesehen, den Bremskörper von außen verstellbar nachzustellen, so dass ein Öffnen des Getriebes nicht erforderlich ist. Die durch Verschleiß des Bremskörpers sich einstellende Abnahme der Bremswirkung der Bremse kann durch Nachstellen des Bremskörpers kompensiert werden. Durch axiales Verstellen des Bremskörpers wird dieser in Richtung des ersten Ringkolbens bewegt, so dass die Bremswirkung zwischen Ringkolben und Bremskörper entsprechend erhöht werden kann bzw. die durch Verschleiß entstandene Minderung der Bremswirkung aufgehoben wird.

Der Bremskörper ist vorzugsweise entsprechend einer Ringfläche am Ringkolben ringförmig ausgebildet und an einen zweiten, am Getriebegehäuse gelagerten und axial verschiebbaren Ringkolben gelagert. Durch Lagerung bzw. Aufhängung des Bremskörpers an einen zweiten mit dem Gehäuse verbundenen Ringkolben kann der Bremskörper je nach Betätigungsmechanismus, sei es pneumatisch, hydraulisch, elektrisch oder mechanisch, bewegt bzw. axial verschoben werden. Der zweite Ringkolben wird dazu in einer an einer Gehäusewand ausgebildeten Ringnut axial beweglich und radial fixiert geführt.

Vorzugsweise ist zwischen dem Bremskörper und zweitem Ringkolben ein Axiallager angeordnet ist, mit welchem zwischen dem Bremskörper und dem zweiten Ringkolben auftretende Axialkräfte übertragbar sind. Der zweite Ringkolben steht damit an einer seiner Stirnflächen mit dem Axiallager in Eingriff, wobei das Axiallager zwischen Bremskörper und Stirnfläche des zweiten Ringkolbens wälzt.

Vorzugsweise weisen der erste Ringkolben sowie der Bremskörper konusförmige Eingriffsflächen auf. Durch eine konusförmige Eingriffsfläche des Bremskörpers bzw. des ersten Ringkobens kann eine gegenüber einer stirnflächigen Eingriffsfläche größere Reibfläche erzielt werden, so dass bei den gegebenen Durchmessern von Ringkolben und Bremskörper eine höhere Bremswirkung erzielt wird bzw. bei gleicher Bremswirkung eine geringere Bremskraft aufgebracht werden muss.

Der erste Ringkolben wird vorzugsweise auf einer auf der Welle axial fixierten kreisförmigen Platte axial verschiebbar geführt, wobei die Platte zwischen dem ersten Ringkolben und dem Bremskörper angeordnet ist. Die Platte dient der radialen Fixierung des ersten Ringkolbens auf der Welle, wobei der erste Ringkolben auf einer radial äußeren Umfangsfläche der Platte axial verschiebbar geführt wird bzw. der erste Ringkolben eine radial innen gelegene Führungsfläche aufweist, die der Umfangsfläche der Platte zugewandt ist.

Der erste Ringkolben ist vorzugsweise mittels der Vorspannmittel in Richtung der Platte gegen den Bremskörper vorgespannt, wobei zwischen dem ersten Ringkolben und der Platte ein hydraulischer Druckraum ausgebildet ist, derart, dass durch Druckbeaufschlagung des Druckraums eine axiale Verschiebung des ersten Ringkolbens entgegen der Vorspannung der Vorspannmittel erfolgt. Durch Druckbeaufschlagung des Druckraums wird der erste Ringkolben somit von der Platte weggedrückt und damit auch von dem Bremskörper entfernt, so dass die Bremse gelöst wird.

Vorzugsweise ist auf der Welle eine Lamellenkupplung angeordnet, welche bei Druckbeaufschlagung des hydraulischen Druckraums durch den ersten Ringkolben betätigbar ist. Insbesondere kann die Lamellenkupplung dadurch betätigt werden, dass der erste Ringkolben mit einer der konusförmigen Eingriffsfläche entgegen gesetzten Stirnfläche mit der Lamellenkupplung in Eingriff tritt, derart, dass die Abtriebswelle mit der Antriebskomponente koppelbar ist. Dazu kann auf der Stirnfläche des Ringkolbens ein Kranz, Kragen, Absatz oder Vorsprung ausgebildet sein, der beispielsweise mit Lamellenscheiben einer Lamellenkupplung in Eingriff tritt. Durch axiale Bewegung des Ringkolbens (entgegen einer axialen Bewegung des Ringkolbens für einen Bremsvorgang) werden dann die Lamellenscheiben zusammengedrückt und ein Kupplungsmoment bzw. Antriebsmoment von der Antriebskomponente auf die Abtriebswelle übertragen. Es können vielerlei Arten von Kupplungen eingesetzt werden, wobei ein Koppelvorgang durch axiale Bewegung des Ringkolbens ausgelöst wird. Durch die angeordneten Vorspannmittel, durch welche der erste Ringkolben gegen den Bremskörper vorgespannt ist, wird gewährleistet, dass wenn keine Axialkraft zur Bewegung des Ringkolbens in eine Kuppelstellung aufgebracht wird, der Ringkolben stets in Bremsstellung verbleibt bzw. die Abtriebswelle stets gebremst bzw. blockiert ist. Als Vorspannmittel eignen sich Federelemente, insbesondere Tellerfedern oder Scheibenfedern, die zwischen einem Absatz der Abtriebswelle und einem Absatz am ersten Ringkolben angeordnet sind. Es können jedoch auch über den Umfang verteilte Schrauben- oder Spiralfedern eingesetzt werden, die die erforderliche Federkraft aufbringen und den Ringkolben in Bremsstellung halten.

Vorzugsweise ist zwischen dem zweiten Ringkolben und dem Getriebegehäuse ein hydraulischer Druckraum ausgebildet ist, derart, dass durch Druckbeaufschlagung des Druckraums eine axiale Verschiebung des am zweiten Ringkolben gelagerten Bremskörpers erfolgt. Dabei baut sich im Druckraum ein Druck entsprechend der durch die Vorspannmittel aufgebrachte Vorspannung des ersten Ringkolbens gegen den Bremskörper auf. Sollte der Bremskörper nach längerer Inbetriebnahme des Getriebes bzw. der Bremse verschlissen sein, so wird dadurch eine Möglichkeit gegeben, den Bremskörper nachzustellen, indem er hydraulisch, durch Druckbeaufschlagung in Richtung des ersten Ringkolbens bewegt wird. Hierbei ist es denkbar die durch Druckbeaufschlagung aufgebrachten Verstellkräfte auch auf andere Art und Weise aufzubringen, beispielsweise pneumatisch durch eine Luftdruckkammer, mechanisch durch Verstellschrauben oder auch elektronisch durch Stellmotoren. Vorzugsweise ist eine hydraulische Verstellung vorgesehen, so dass der Druckraum über einen mit einem Rückschlagventil versehenen Zugang mit Hydrauliköl oder Hydraulikmittel unter Druck gefüllt werden kann, wobei das Hydrauliköl bzw. Hydraulikmittel dauerhaft im Druckraum verbleibt. Sollte sich ein Verschleiß des Bremskörpers einstellen, so wird der durch die Vorspannung sich einstellende Druck im Druckraum abnehmen. Durch Nachfüllen von Hydraulikflüssigkeit kann der Druck im Druckraum wieder erhöht werden, woraufhin sich der Bremskörper axial in Richtung des ersten Ringkolbens verschieben wird, so dass eine Nachstellung des Bremskörpers erfolgt.

Vorzugsweise sind Mittel zur Verdrehsicherung des Bremskörpers derart gegenüber dem Getriebegehäuse vorgesehen sind, dass ein voreingestelltes Verdrehspiel des Bremskörpers gegenüber dem Getriebegehäuse zugelassen wird. Dies wird beispielsweise dadurch erreicht, dass der Bremskörper über Befestigungsbolzen bzw. -schrauben an das Gehäuse befestigt wird, wobei in dem Bremskörper an Stelle von runden Befestigungsbohrungen Langlochbohrungen ausgebildet sind, die sich über einen bestimmten vorgebbaren Umfangsabschnitt auf dem Radius der Befestigungsbolzen erstrecken, so dass ein gewisser Freilauf bzw. ein gewisses Bewegungsspiel des Befestigungskörpers gegenüber dem Gehäuse hergestellt wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

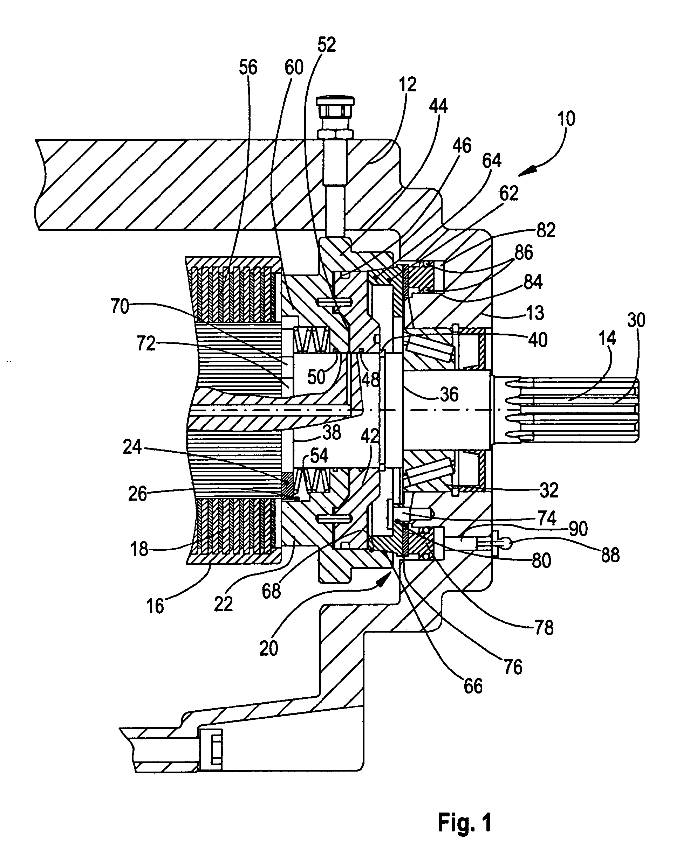

- Fig. 1: eine schematische Querschnittsansicht einer erfindungsgemäßen Getriebeanordnung.

Eine in Figur 1 teilweise dargestellte Getriebeanordnung 10 für ein Zapfwellengetriebe, beispielsweise eines landwirtschaftlichen Schleppers, umfasst ein Getriebegehäuse 12 mit einer Getriebegehäusewand 13, eine als Zapfwelle ausgebildete Abtriebswelle 14, eine als Zahnradwelle (nicht gezeigt) ausgebildete Antriebskomponente 16, eine zwischen der Abtriebswelle 14 und der Antriebskomponente 16 angeordnete Kupplung 18, eine Bremseinrichtung 20 und einen zwischen Kupplung 18 und Bremseinrichtung 20 angeordneten Ringkolben 22.

Der Ringkolben 22 ist axial verschiebbar auf der Abtriebswelle 14 gelagert und über drei auf den Umfang verteilte Übertragungselemente 24 drehfest mit der Abtriebswelle 14 verbunden. Die Übertragungselemente 24 sind als Scheiben ausgebildet, welche in die Abtriebswelle 14 eingepasst sind und sich in entsprechende am Ringkolben 22 ausgebildete Aussparungen 26 erstrecken und dementsprechend als Drehmomentübertragung zwischen Ringkolben 22 und Abtriebswelle 14 dienen. Dabei sind die Aussparungen 26 derart ausgebildet, dass eine axiale Verschiebung des Ringkolbens 22 gegenüber der Abtriebswelle 14 zugelassen bzw. ermöglicht wird.

Die als Zapfwelle ausgebildete Abtriebswelle 14 weist an ihrem freiliegenden Ende eine Verzahnung 30 zum Antreiben eines Anbau- oder Anhängegerätes (nicht gezeigt) auf. Die Abtriebswelle 14 ist über ein erstes Lager 32 an der Getriebegehäusewand 13 gelagert. Ein zweites Lager (nicht gezeigt) dient zur Lagerung der Abtriebswelle 14 innerhalb des Getriebegehäuses 12. Die Abtriebswelle 14 ist mit einem ersten Absatz 36 und einem zweiten Absatz 38 versehen, wobei das erste Lager 32 an den ersten Absatz 36 anliegend angeordnet ist.

Zwischen dem ersten und dem zweiten Absatz 36, 38 ist eine über einen Sicherungsring 40 axial gesicherte kreisförmige Platte oder Scheibe 42 angeordnet, an die der auf der Abtriebswelle 14 axial verschiebbar gelagerte Ringkolben 22 angrenzt. An dem Ringkolben 22 ist ein sich axial in Richtung der Getriebegehäusewand 13 erstreckender Führungskranz 44 ausgebildet, der die Scheibe 42 radial umschließt und von dieser axial geführt wird. Zwischen dem Führungskranz 44 und der Scheibe 42 ist ein Dichtungsring 46 angeordnet, der die Scheibe 42 gegenüber dem Führungskranz 44 radial abdichtet. Zwischen der Abtriebswelle 14 und der Scheibe 42 ist ein weiterer Dichtungsring 48 angeordnet, der die Scheibe 42 gegenüber der Abtriebswelle 14 radial abdichtet. Die Scheibe 42 ist innerhalb des Führungskranzes 44 derart gelagert, dass sie eine axiale Relativbewegung gegenüber den Ringkolben 22 ausführen kann. Der Ringkolben 22 ist über einen weiteren Dichtungsring 50 gegenüber der Abtriebswelle 14 radial abgedichtet. Zwischen der Scheibe 42 und dem Ringkolben 22 ist eine Hydraulikkammer 52 ausgebildet, die durch eine dem Ringkolben 22 zugewandte Stirnfläche der Scheibe 42, durch eine der Scheibe 42 zugewandte Stirnfläche des Ringkolbens 22, durch die Umfangsfläche der Abtriebswelle 14 und durch die radial nach innen gerichtete Führungsfläche des Führungskranzes 44 begrenzt wird.

Wie in Figur 1 zu erkennen ist, ist der Ringkolben 22 zwischen der Scheibe 42 und dem zweiten Absatz 38 axial verschiebbar angeordnet. Zwischen dem Ringkolben 22 und dem zweiten Absatz 38 ist ein als Tellerfeder ausgebildetes Federelement 54 angeordnet, welches den Ringkolben 22 in Richtung der Scheibe 42 vorspannt bzw. den Ringkolben 22 gegen die Scheibe 42 drückt. Auf dem zweiten Absatz 38 sind Kupplungselemente 56 in Form von abtriebswellenseitigen und antriebskomponentenseitigen Lamellenscheiben angeordnet. An dem Ringkolben 22 ist ein sich axial in Richtung der Kupplungselemente 56 erstreckender Kranz 60 ausgebildet.

Die Bremseinrichtung 20 weist einen an die Getriebegehäusewand 13 befestigten Bremskörper in Form eines Flanschs 62 auf. Der Flansch 62 weist einen Bremskranz 64 auf, der einer radial nach innen gerichteten Seite des Führungskranzes 44 angrenzt. An dem Bremskranz 64 ist eine radial nach außen gerichtete erste Bremsfläche 66 ausgebildet. Die radial nach innen gerichtete Seite des Führungskranzes 44 ist mit einer zweiten Bremsfläche 68 versehen. Beide Bremsflächen 66, 68 sind leicht konisch ausgebildet, so dass sich durch axiale Verschiebung des Ringkolbens 22 gegenüber dem Flansch 62 ein Reibschluss zwischen den Bremsflächen 66, 68 einstellen bzw. unterbrochen werden kann.

Wie bereits erwähnt, sind die Übertragungselemente 24 als Scheiben ausgebildet, die über Ausnehmungen 70 an einer durch den zweiten Absatz 38 geformten Fläche 72 mit der Abtriebswelle 14 verbunden sind. Die Übertragungselemente 24 sind vorzugsweise fest in einem Presssitz in den Ausnehmungen 70 aufgenommen. Ein Teil der als Scheiben ausgebildeten Übertragungselemente 24 ragt radial über den Rand des zweiten Absatzes 38 hinaus, wobei die an dem Ringkolben 22 ausgebildeten Aussparungen 26 genau diesen Teil der Übertragungselemente 24 aufnehmen. Die Aussparungen 26 sind dabei an der radial innen liegenden Seite des Kranzes 60 ausgeformt und bilden im montierten Zustand einen radial und in Umfangsrichtung der Abtriebswelle 14 begrenzten Hohlraum, wobei die über den Rand des zweiten Absatzes 38 hinausragenden Teile der Übertragungselemente 24 in den Hohlraum hineinragen. Die Aussparungen 26 sind über einen Umfang von 60° symmetrisch angeordnet, wobei drei Aussparungen 26 vorgesehen sind, in die sich jeweils ein Übertragungselement 24 erstreckt. Insgesamt sind also drei über den Umfang verteilte Übertragungselemente 24 angeordnet. Die Anzahl der Übertragungselemente 24 bzw. der Aussparungen 26 kann variieren und ist in dem hier gezeigten Ausführungsbeispiel auf drei begrenzt. Am Ende einer jeden Aussparung 26 stoßen die Übertragungselemente 24 in Umfangsrichtung an die Wandung des Kranzes 60 so dass zwischen Ringkolben 22 und Abtriebswelle 14 ein Kraftschluss in Umfangsrichtung hergestellt wird. Je nach Kraftschlussrichtung kann so ein Antriebsmoment von der Antriebskomponente 16 oder ein Bremsmoment bzw. Blockiermoment von der Bremseinrichtung 20 auf die Abtriebswelle 14 übertragen werden.

Der Flansch 62 der Bremseinrichtung 20 ist über auf den Umfang verteilte Befestigungsbolzen 74 an das Getriebegehäuse 12 bzw. an die Getriebegehäusewand 13 befestigt. Die Befestigungsbolzen 74 sind dabei derart ausgebildet, dass ein axiales Spiel zwischen Flansch 62 und Getriebegehäusewand 13 vorhanden ist, so dass eine vorgebbare axiale Verschiebung des Flansches 62 trotz Befestigung durch die Befestigungsbolzen 74 ermöglicht wird. Ferner ist der Flansch 62 auf einem Axiallager 76 gelagert, so dass ein Verdrehen des Flansches 62 unter Einwirkung von Axialkräften ermöglicht wird. Das Axiallager 76 ist seinerseits auf einem in der Getriebegehäusewand 13 eingepassten und dort geführten Ringkolben 78 gelagert, derart, dass durch axiales Verschieben des Ringkolbens 78 eine axiale Verschiebung des Axiallagers 76 und damit des Flansches 62 erfolgen kann. Damit wird ein axiales Nachstellen des Bremskranzes 64 bzw. des Flansches 62, innerhalb des dafür vorgesehenen axialen Spiels ermöglicht.

Der Flansch 62 ist ferner mit einer in Umfangsrichtung beschränkten Freilaufeinrichtung versehen, so dass der Flansch 62 bzw. der Bremskranz 64 zwar als Bremsdrehmoment übertragende Komponente zwischen dem Ringkolben 22 und dem Getriebegehäuse 12 dient, darüber hinaus aber im blockierten Zustand der Abtriebswelle 14 ein beschränktes Verdrehen der Abtriebswelle 14 ermöglicht wird. Die Freilaufeinrichtung wird dadurch ausgebildet, dass die zur Befestigung des Flansches 62 im Flansch 62 ausgebildeten Befestigungsbohrungen 80 als Langlochbohrungen ausgebildet sind. Die Langlochbohrungen erstrecken sich dabei auf einem konstanten Radius zur Abtriebswellenachse über einen gewissen Bereich des Umfangs des Flansches 62, beispielsweise über 60°. Die Abtriebswelle lässt sich dann im Umfang dieser Langlochbohrungen, bzw. im Umfang dessen, wie sich die Langlochbohrungen gegenüber den Befestigungsbolzen 74 verdrehen lassen, verdrehen. So kann die Abtriebswelle 14 im vorliegenden Ausführungsbeispiel um 60° in eine Richtung verdreht werden, da sich die als Langlochbohrungen ausgebildeten Befestigungsbohrungen 80 über einen Umfangsabschnitt von 60° erstrecken. Erst wenn die Befestigungsbolzen 74 an ein Ende der Befestigungsbohrungen 80 gelangen bzw. stoßen wird ein Kraftschluss bzw. ein Bremsmoment in Umfangsrichtung hergestellt bzw. der Flansch in Umfangsrichtung blockiert. Gleichermaßen kann die Abtriebswelle 14 wieder in entgegen gesetzte Richtung um 60° verdreht werden, bis die Befestigungsbolzen 74 gegen das andere Ende der Befestigungsbohrungen 80 stoßen. Der Freilaufwinkel kann entsprechend der Ausbildung der Befestigungsbohrungen 80 (hier 60° Umfangswinkel) variiert werden.

Zwischen Ringkolben 78 und Getriebegehäusewand 13 ist eine Hydraulikkammer 82 ausgebildet, die durch eine Stirnfläche des Ringkolbens 78 sowie durch eine in der Gehäusewand 13 ausgebildete Ringnut 84 begrenzt wird. Der Ringkolben 78 wird über entsprechende Kolbendichtringe 86 in der Ringnut 84 axial verschiebbar geführt. Zum Befüllen der Hydraulikkammer 82 ist ein mit einem Rückschlagventil 88 versehener Einfüllkanal 90 vorgesehen, durch den Hydraulikflüssigkeit, beispielsweise Hydrauliköl oder Schmiermittel unter Druck in die Hydraulikkammer 82 gefüllt werden kann. Eine dadurch verursachte Druckbeaufschlagung der Hydraulikkammer 82 bewirkt dann eine axiale Verschiebung des Ringkolbens 78 bzw. des über das Axiallager 76 mit dem Ringkolben 78 verbundenen Flansches 62.

Die Funktionsweise der Getriebeanordnung 10 und insbesondere die der Freilaufeinrichtung 24 wird nun im Folgenden beschrieben.

Durch Befüllen der Hydraulikkammer 52 wird der Ringkolben 22 in Richtung der Kupplung 18 bewegt, wobei der Ringkolben 22 durch die Ausbildung des Kranzes 60 auf der der Kupplung zugewandten Seite als Kupplungskolben ausgebildet ist. Auf der der Bremseinrichtung 20 zugewandten Seite, ist der Ringkolben 22 durch die Ausbildung der Bremsfläche 68 als Bremskolben ausgebildet. Je nach Betätigung des Ringkolbens 22 können drei verschiedene Betriebszustände eintreten, ein Bremszustand bzw. Blockierzustand, ein Kupplungszustand und ein Leerlaufzustand. Der Bremszustand wird automatisch eingenommen, sobald die Hydraulikkammer 52 druckentlastet wird. Durch die Vorspannkraft des Federelements 54 wird der Ringkolben 22 in Richtung der Bremseinrichtung 20 gedrückt, so dass die Bremsflächen 66, 68 in Reibschluss treten und den Ringkolben gegenüber dem Getriebegehäuse 12 (gegebenenfalls nach Vollzug des Freilaufs in den Befestigungsbohrungen 80) abbremsen bzw. blockieren. In diesem Bremszustand ist der Ringkolben 22 und damit auch die drehfest mit dem Ringkolben 22 verbundene Abtriebswelle 14 blockiert. Wird die Hydraulikkammer 52 hingegen mit Hydraulikflüssigkeit befüllt bzw. druckbeaufschlagt, dann bewegt sich der Ringkolben 22 entgegen der Vorspannkraft des Federelements 54 in Richtung der Kupplung 18, so dass die Bremsflächen 66, 68 ihren Reibschluss auflösen. In diesem Zustand ist der Ringkolben 22 weder mit der Bremseinrichtung 20 noch mit der Kupplung 18 verbunden, so dass der Ringkolben 22 frei drehbar gelagert ist. Damit ist auch die Abtriebswelle 14 frei drehbar und befindet sich in einem Leerlaufzustand. Dieser Leerlaufzustand wird verlassen, sobald der Ringkolben 22 durch weiteres Befüllen der Hydraulikkammer 52 bzw. durch weitere Druckbeaufschlagung weiter in Richtung der Kupplung 18 bewegt wird und der an dem Ringkolben 22 ausgebildete Kranz 60 mit den Kupplungselementen 56 in Eingriff tritt und diese zusammen drückt, so dass ein Kupplungsreibschluss zwischen den abtriebswellenseitigen und den antriebskomponentenseitigen Lammellenscheiben eintritt. In diesem Kupplungszustand können Drehmomente von der Antriebskomponente 16 auf die Abtriebswelle 14 übertragen werden.

Sollte sich nun nach mehrmaligem Betätigen der Bremseinrichtung 20 ein Verschleiß der Bremseinrichtung 20 bzw. der Bremsflächen 66, 68 einstellen, so kann durch axiales Verschieben des Ringkolbens 78 in Richtung des Ringkolbens 22 der durch den Ringkolben 78 axial fixierte Flansch 62 nachgestellt werden. Dies kann, wie oben bereits erwähnt, durch Druckbeaufschlagung der Hydraulikkammer 82 erfolgen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise die Druckbeaufschlagung der Hydraulikkammer 82 zum Nachstellen des Flansches 62 auch durch eine axial wirkende Nachstellkraft ersetzt werden, die beispielsweise durch Federelemente, durch Nachstellschrauben oder auch durch elektrische Stellmotoren, die auf den Ringkolben 78 einwirken und diesen axial verschieben, erzeugt wird.

## Patentansprüche

1. Getriebe (10), insbesondere Zapfwellengetriebe, mit einem Getriebegehäuse (12), einer im Getriebegehäuse (12) gelagerten Welle (14) und einer im Getriebegehäuse (12) angeordneten Bremse (20) zum Bremsen der Welle (14), wobei die Bremse (20) einen ersten auf der Welle (14) axial verschiebbar gelagerten Ringkolben (22) und einen am Getriebegehäuse (12) befestigten Bremskörper (62) umfasst, wobei der erste Ringkolben (22) axial in Richtung des Bremskörpers (62) gegen diesen vorspannbar und durch axiale Verschiebung entgegen der Vorspannung von diesem lösbar ist, **dadurch gekennzeichnet, dass** der Bremskörper (62) axial verschiebbar gelagert und ringförmig ausgebildet ist wobei der Bremskörper (62) an einen zweiten, am Getriebegehäuse (12) gelagerten und axial verschiebbaren Ringkolben (78) gelagert ist.

2. Getriebe nach Anspruch 1, **dadurch gekennzeichnet, dass** zwischen Bremskörper (62) und zweitem Ringkolben (78) ein Axiallager (76) angeordnet ist, mit welchem zwischen dem Bremskörper (62) und dem zweiten Ringkolben (78) auftretende Axialkräfte übertragbar sind.

3. Getriebe nach einem der Ansprüche 1 oder 2, **dadurch gekennzeichnet, dass** der erste Ringkolben (22) sowie der Bremskörper (62) konusförmige Eingriffsflächen (66, 68) aufweisen.

4. Getriebe nach einem der Ansprüche 1 bis 3, **dadurch gekennzeichnet, dass** der erste Ringkolben (22) auf einer auf der Welle (14) axial fixierten kreisförmigen Platte (42) axial verschiebbar geführt wird.

5. Getriebe nach Anspruch 4, **dadurch gekennzeichnet, dass** der erste Ringkolben (22) mittels Vorspannmittel (54) in Richtung der Platte (42) gegen den Bremskörper (62) vorgespannt und zwischen dem ersten Ringkolben (22) und der Platte (42) ein hydraulischer Druckraum (52) ausgebildet ist, derart, dass durch Druckbeaufschlagung des Druckraums (52) eine axiale Verschiebung des ersten Ringkolbens (22) entgegen der Vorspannung der Vorspannmittel (54) erfolgt.

6. Getriebe nach Anspruch 5, **dadurch gekennzeichnet**, das auf der Welle (14) eine Lamellenkupplung (18) angeordnet ist, welche bei Druckbeaufschlagung des hydraulischen Druckraums (52) durch den ersten Ringkolben (22) betätigbar ist.

7. Getriebe nach einem der Ansprüche 1 bis 6, **dadurch gekennzeichnet, dass** zwischen dem zweiten Ringkolben (78) und dem Getriebegehäuse (12) ein hydraulischer Druckraum (82) ausgebildet ist, derart, dass durch Druckbeaufschlagung des Druckraums (82) eine axiale Verschiebung des am zweiten Ringkolben (78) gelagerten Bremskörpers (62) erfolgt.

8. Getriebe nach einem der Ansprüche 1 bis 7, **dadurch gekennzeichnet, dass** Mittel zur Verdrehsicherung des Bremskörpers (62) gegenüber dem Getriebegehäuse (12) derart vorgesehen sind, dass ein voreingestelltes Verdrehspiel des Bremskörpers (62) gegenüber dem Getriebegehäuse (12) zugelassen wird.

## Claims

1. Transmission (10), in particular power take-off transmission, with a transmission case (12), with a shaft (14) mounted in the transmission case (12) and with a brake (20), arranged in the transmission case (12), for braking the shaft (14), the brake (20) comprising a first annular piston (22) mounted axially displaceably on the shaft (14) and a braking body (62) fastened to the transmission case (12), the first annular piston (22) being prestressable axially in the direction of the braking body (62) against the latter and being releasable from the latter as a result of axial displacement counter to the prestress, **characterized in that** the braking body (62) is mounted axially displaceably and is designed in the form of a ring, the braking body (62) being mounted on a second annular piston (78) which is mounted on the transmission case (12) and is axially displaceable.

2. Transmission according to Claim 1, **characterized in that** between braking body (62) and second annular piston (78) an axial bearing (76) is arranged, by means of which axial forces arising between the braking body (62) and the second annular piston (78) can be transmitted.

3. Transmission according to either one of Claims 1 and 2, **characterized in that** the first annular piston (22) and braking body (62) have conical engagement surfaces (66, 68).

4. Transmission according to one of Claims 1 to 3, **characterized in that** the first annular piston (22) is guided axially displaceably on a circular plate (42) fixed axially on the shaft (14).

5. Transmission according to Claim 4, **characterized in that** the first annular piston (22) is prestressed by prestressing means (54) in the direction of the plate (42) against the braking body (62) and a hydraulic pressure space (52) is formed between the first annular piston (22) and the plate (42) in such a way that, by the action of pressure upon the pressure space (52), axial displacement of the first annular piston (22) counter to the prestress of the prestressing means (54) takes place.

6. Transmission according to Claim 5, **characterized in that** a multiple-disc clutch (18) is arranged on the shaft (14) and can be actuated when the hydraulic pressure space (52) is acted upon with pressure by the first annular piston (22).

7. Transmission according to one of Claims 1 to 6, **characterized in that** a hydraulic pressure space (82) is formed between the second annular piston (78) and the transmission case (12) in such a way that, by the action of pressure upon the pressure space (82), axial displacement of the braking body (62) mounted on the second annular piston (78) takes place.

8. Transmission according to one of Claims 1 to 7, **characterized in that** means for securing the braking body (62) against rotation with respect to the transmission case (12) are provided in such a way that a preset rotary play of the braking body (62) with respect to the transmission case (12) is permitted.

## Revendications

1. Boîte de vitesses (10), en particulier boîte de vitesses prise de force, avec un carter de boîte de vitesses (12), un arbre (14) supporté dans le carter de boîte de vitesses (12) et un frein (20) disposé dans le carter de boîte de vitesses (12) pour freiner l'arbre (14), dans laquelle le frein (20) comprend un premier piston annulaire (22) monté de façon axialement coulissante sur l'arbre (14) et un corps de frein (62) fixé au carter de boîte de vitesses (12), dans laquelle le premier piston annulaire (22) peut être précontraint axialement contre le corps de frein (62) en direction de ce dernier et peut être séparé de celui-ci par un déplacement axial opposé à la précontrainte, **caractérisée en ce que** le corps de frein (62) est monté de façon axialement coulissante et est réalisé en forme d'anneau, dans laquelle le corps de frein (62) est monté sur un deuxième piston annulaire (78) monté sur le carter de boîte de vitesses (12) et pouvant coulisser axialement.

2. Boîte de vitesses selon la revendication 1, **caractérisée en ce qu'**il se trouve entre le corps de frein (62) et le deuxième piston annulaire (78) un palier axial (76), avec lequel des forces axiales apparaissant entre le corps de frein (62) et le deuxième piston annulaire (78) peuvent être transmises.

3. Boîte de vitesses selon l'une quelconque des revendications 1 ou 2, **caractérisée en ce que** le premier piston annulaire (22) ainsi que le corps de frein (62) présentent des faces d'engagement de forme conique (66, 68).

4. Boîte de vitesses selon l'une quelconque des revendications 1 à 3, **caractérisée en ce que** le premier piston annulaire (22) est guidé de façon axialement coulissante sur une plaque circulaire (42) axialement fixée sur l'arbre (14).

5. Boîte de vitesses selon la revendication 4, **caractérisée en ce que** le premier piston annulaire (22) est précontraint contre le corps de frein (62) en direction de la plaque (42) au moyen de moyens de précontrainte (54) et une chambre de pression hydraulique (52) est réalisée entre le premier piston annulaire (22) et la plaque (42), de telle manière qu'une mise sous pression de la chambre de pression (52) provoque un déplacement axial du premier piston annulaire (22) contre la précontrainte des moyens de précontrainte (54).

6. Boîte de vitesses selon la revendication 5, **caractérisée en ce qu'**il se trouve sur l'arbre (14) un embrayage multidisque (18), qui peut être actionné par le premier piston annulaire (22) lors de la mise sous pression de la chambre de pression hydraulique (52).

7. Boîte de vitesses selon l'une quelconque des revendications 1 à 6, **caractérisée en ce qu'**une chambre de pression hydraulique (82) est formée entre le deuxième piston annulaire (78) et le carter de boîte de vitesses (12), de telle manière qu'il se produise un déplacement axial du corps de frein (62) monté sur le deuxième piston annulaire (78) par une mise sous pression de la chambre de pression (82).

8. Boîte de vitesses selon l'une quelconque des revendications 1 à 7, **caractérisée en ce qu'**il est prévu des moyens pour bloquer la rotation du corps de frein (62) par rapport au carter de boîte de vitesses (12), de telle manière qu'un jeu de rotation préréglé du corps de frein (62) par rapport au carter de boîte de vitesses (12) soit autorisé.
